# EUROPEAN PATENT SPECIFICATION

(11) **EP 3 206 362 B1**
(45) Date of publication and mention of the grant of the patent: **10.07.2019**
(21) Application number: 16800866.2
(22) Date of filing: 04.05.2016
(51) Int. Cl.: H04L 29/06, H04N 21/426, H04N 21/442, H04N 21/45, H04N 21/475

(54) **ACCOUNT LOGIN METHOD AND APPARATUS**
KONTOANMELDEVERFAHREN UND VORRICHTUNG
PROCÉDÉ ET APPAREIL D'OUVERTURE DE SESSION DE COMPTE

(30) Priority: 19.11.2015 CN 201510808831
(43) Date of publication of application: 16.08.2017
(60) Divisional application: 19152700.1
(73) Proprietor: Huawei Technologies Co., Ltd., Longgang District Shenzhen, Guangdong 518129 (CN)
(72) Inventor: SU, Wei, Shenzhen Guangdong 518129 (CN); WANG, Tizheng, Shenzhen Guangdong 518129 (CN)
(74) Representative: Thun, Clemens
(86) International application number: PCT/CN2016/080999
(87) International publication number: WO 2017/084246

(56) References cited:
- CN-A- 102 271 285
- CN-A- 103 533 392
- CN-A- 104 780 167
- CN-A- 104 780 167
- CN-A- 105 337 984
- US-A1- 2011 136 442
- US-A1- 2014 189 148

## Description

### TECHNICAL FIELD

The present invention relates to the field of communications technologies, and in particular, to a method and an apparatus for logging in to an operator account in watching a television program.

### BACKGROUND

A digital video converter box, usually referred to as a set top box (English: Set Top Box, STB for short), is a device that connects a television set and an external signal source. The device can convert a compressed digital signal into television content, and display the television content on the television set. A signal may be from a wired cable, a satellite antenna, a broadband network, or terrestrial broadcasting. In addition to received content such as images and sound that can be presented by an analog television, the set top box even can receive digital content including electronic program guides, Internet web pages, subtitles, and the like. An operator provides a video service to a user by using an STB; and by operating an interface output by the STB to a TV screen, the user selects and watches content provided by the operator, and carries out interactive digital entertainment, education, and commercial activities by using a network.

When subscribing to the video service from the operator, the user needs to register corresponding information for subscribing to the service and obtains a paid service by using a registered account. When the user logs in to the account by using the STB, the account is used by a system to identify a user identity. In this way, the STB can output content based on a watching behavior of the user and data analysis to the TV screen, so that the user obtains personalized content and operation experience. The operator may analyze, according to an identity of a user, data of a product used and content watched by the user, and send content and a service which the user likes and is interested in to the STBfor presentation on a display screen, thereby implementing personalized watching experience, and further improving experience quality of services that are provided by the operator.

Because multiple family members in a family use a set top box, a key issue in such an application scenario is how the operator accurately determines a user that currently watches content by using the set top box, so as to implement an accurate personalized service.

In the prior art, the user who currently watches the content can be determined by manually setting multiple accounts and manually selecting an account for login. That is, after subscribing to a video service, the user sets different accounts (which are usually set during first use) when using the set top box. Afterwards, whenever the set top box is started to access the video service, an account login interface is first displayed on the TV screen. In this case, the user selects the user's own account by pressing a button on a remote control, enters a login password, and accesses a video content page. The set top box provides a personalized content service (for example, presenting content that is recently watched by using the account, and recommending content which the user is interested in) on the video content page according to login account information.

However, in the prior art, to implement an accurate personalized content service, multiple accounts need to be set and used. In both processes of setting and selecting a login account, a user needs to perform lots of operations, for example, manual inputs, on a TV interface by using a remote control. Especially, when another user is to watch content, the user needs to re-enter the user's own account to obtain a dedicated personalized service of the user. In this way, the user needs to perform relatively complex operations to implement account login.

CN 104 780 167 A discloses an account login method and a terminal. The method comprises steps as follows: the terminal acquires target login information corresponding to target feature information from an association table of pre-stored feature information and login information through acquiring the target feature information of a user, wherein the target login information comprises target account information and an application library associated with the target account information; the target account information is submitted to a server corresponding to a target application in the application library according to the target login information; when the target account information passes verification by the server corresponding to the target application, the terminal outputs interface information of the target application. With the adoption of the account login method and the terminal, the account login efficiency can be improved by the terminal.

US 2011/0136442 A1 discloses systems, methods and apparatus for identifying a user of an entertainment device. An entertainment device includes a wireless transceiver that communicatively couples to a mobile communication device through a wireless network. The wireless transceiver and the mobile communication device automatically establish a communication link over the wireless network when the mobile communication device is located proximate the entertainment device. The entertainment device further comprises control logic operable to identify a user of the mobile communication device, responsive to establishment of the communication link, based on information identifying the mobile communication device and customize output of content responsive to identifying the user.

### SUMMARY

In view of this, embodiments of the present invention provide an account login method and apparatus. According to the method and the apparatus, when watching television, a user does not need to perform an input operation for logging in to an operator server.

According to a first aspect, an embodiment of the present invention provides an account login method, where a set top box and a mobile terminal access a same wireless network, and the set top box obtains a terminal identifier of the mobile terminal by using the wireless network; the set top box searches, according to the terminal identifier, a relationship table for a service account and a password that are corresponding to the terminal identifier, where the relationship table includes a correspondence between a terminal identifier and each of a service account and a password; and if the set top box finds the service account and the password that are corresponding to the terminal identifier, the set top box logs in to a content server by using the service account and the password that are corresponding to the terminal identifier, wherein the terminal identifier is an account of an application A being used by the mobile terminal, and the relationship table comprises a correspondence between the account of the application A and each of a service account and a password; the obtaining, by a set top box, a terminal identifier of a mobile terminal by using a wireless network comprises: sending, by the set top box, an authentication request of the application A to the mobile terminal by using the wireless network, wherein the authentication request of the application A is used to instruct the mobile terminal to send, to the set top box, the account of the application A being used by the mobile terminal; and the searching, by the set top box according to the terminal identifier, a relationship table for a service account and a password that are corresponding to the terminal identifier comprises: searching, by the set top box according to the account of the application A being used by the mobile terminal, the relationship table for a service account and a password that are corresponding to the account of the application A being used by the mobile terminal.

In a possible design, if the set top box does not find the service account and the password that are corresponding to the terminal identifier, the set top box does not perform login.

In a possible design, if the set top box finds the service account and the password that are corresponding to the terminal identifier, and the service account corresponding to the terminal identifier is in a logged-in state, the set top box no longer performs login by using the service account corresponding to the mobile terminal identifier.

In a possible design, the set top box allows simultaneous login of multiple service accounts to the content server, and allows the multiple service accounts to be online simultaneously.

In a possible design, the set top box has performed login by using the service account corresponding to the terminal identifier, and if the set top box does not obtain the terminal identifier again within a predetermined time, an offline operation is performed on the service account corresponding to the terminal identifier.

According to a second aspect, an embodiment of the present invention provides an account login apparatus, where the apparatus includes:
an obtaining module, configured to: when the apparatus and a mobile terminal access a same wireless network, obtain a terminal identifier of the mobile terminal;
a searching module, configured to search, according to the terminal identifier obtained by the obtaining module, a relationship table for a service account and a password that are corresponding to the terminal identifier, where the relationship table includes a correspondence between a terminal identifier and each of a service account and a password; and
a login module, configured to: if the searching module finds the service account and the password that are corresponding to the terminal identifier, log in to a content server by using the service account and the password that are corresponding to the terminal identifier, wherein the terminal identifier is an account of an application A being used by the mobile terminal, and the relationship table comprises a correspondence between the account of the application A and each of a service account and a password; the obtaining module is specifically configured to send an authentication request of the application A to the mobile terminal by using the wireless network, wherein the authentication request of the application A is used to instruct the mobile terminal to send the account of the application A being used by the mobile terminal to the obtaining module; and the searching module is specifically configured to search, according to the account, learned by the obtaining module, of the application A being used by the mobile terminal, the relationship table for a service account and a password that are corresponding to the account of the application A being used by the mobile terminal.

In a possible design, if the searching module does not find the service account and the password that are corresponding to the terminal identifier, the login module does not perform login.

In a possible design, if the searching module finds the service account and the password that are corresponding to the terminal identifier, and the service account corresponding to the terminal identifier is in a logged-in state, the login module no longer performs login by using the service account corresponding to the terminal identifier.

In a possible design, the login module allows simultaneous login of multiple service accounts to the content server.

In a possible design, after performing login by using the service account corresponding to the terminal identifier, the login module is further configured to: if the obtaining module cannot obtain the terminal identifier again within a predetermined time, perform an offline operation on the service account corresponding to the terminal identifier.

According to the technical solutions provided in the embodiments of the present invention, when a set top box and a mobile terminal access a same wireless network, the set top box may obtain a terminal identifier of the mobile terminal by using the wireless network; the set top box searches, according to the terminal identifier, a relationship table for a service account and a password that are corresponding to the terminal identifier, where the relationship table includes a correspondence between a terminal identifier and each of a service account and a password; and if the set top box finds the, service account and the password that are corresponding to the foregoing terminal identifier, the set top box logs in to a server by using the service account and the password that are corresponding to the foregoing terminal identifier. According to this series of automation methods, a user does not need to perform an input operation when using a set top box. Especially, when another user is to watch content, the user needs to perform switching and log in to the user's own account to obtain dedicated personalized content pushed to the user. Because no input operation needs to be performed, the user can log in to the account at any time when needing to watch, and rapidly locate content pushed by an operator. In addition, when multiple users simultaneously watch television, by means of automatic account login, content pushed to all users can be simultaneously presented on a screen, which facilitates the multiple users to find a common interest point and topic, thereby enhancing emotional communication. In conclusion, according to the present invention, better experience can be brought for a personalized push requirement of a user.

### BRIEF DESCRIPTION OF DRAWINGS

FIG. 1 is a flowchart of an account login method according to an embodiment of the present invention;
FIG. 2 is a schematic diagram of a correspondence table between a terminal identifier and each of a service account and a password according to an embodiment of the present invention;
FIG. 3 is another schematic diagram of a correspondence table between a terminal identifier and each of a service account and a password according to an embodiment of the present invention;
FIG. 4 is a schematic diagram of interaction between a set top box and a mobile terminal according to a background example;
FIG. 5 is another schematic diagram of interaction between a set top box and a mobile terminal according to an embodiment of the present invention;
FIG. 6 is a schematic structural diagram of an account login apparatus according to an embodiment of the present invention;
FIG. 7 is a schematic structural diagram of an account login device according to an embodiment of the present invention; and
FIG. 8 is a schematic structural diagram of a system of a set top box according to an embodiment of the present invention.

### DESCRIPTION OF EMBODIMENTS

Embodiments of the present invention provide an account login method and apparatus.

The following clearly and completely describes the technical solutions in the embodiments of the present invention with reference to the accompanying drawings in the embodiments of the present invention. Apparently, the described embodiments are merely some embodiments but not all of the embodiments of the present invention.

An application scenario of the present invention is that a user uses a set top box to watch a television service provided by an operator. To provide good watching experience to the user, the operator obtains the user's favorite program content according to the user's subscription, preference, or long-term watching habit, and further pushes personalized content in a targeted manner. Therefore, it is very important for the operator to identify an identity of a user who currently watches a program. However, in conventional technical solutions, a user needs to log in to an account for user identity identification, which is relatively troublesome in use by the user. The present invention provides an account login method according to which a correspondence between a user identity and an account is established by using a portable mobile terminal that can be carried by a user, and a set top box obtains an identifier of the mobile terminal, then obtains an account corresponding to the user identity, and performs login, thereby freeing the user from performing an operation.

In addition, two servers are involved in the present invention: one is a content server, which is a server mainly configured to provide service content such as a television program; and the other is an authentication server, which is a server configured to implement a login function such as user identification. In some cases, the operator integrates the foregoing two servers, which are collectively referred to as a server.

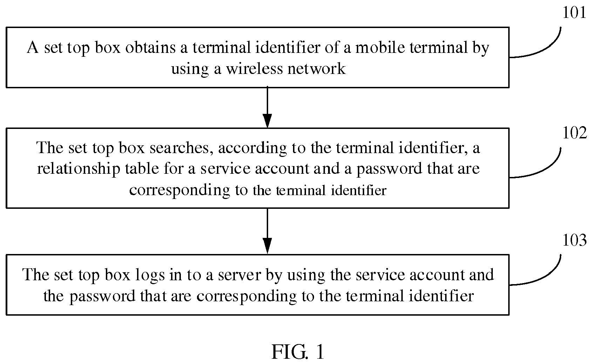

Referring to FIG. 1, FIG. 1 is a flowchart of an account login method according to an embodiment of the present invention. A specific method is exemplarily described as follows:

Step 101: A set top box and a mobile terminal access a same wireless network, and the set top box obtains a terminal identifier of the mobile terminal by using the wireless network.

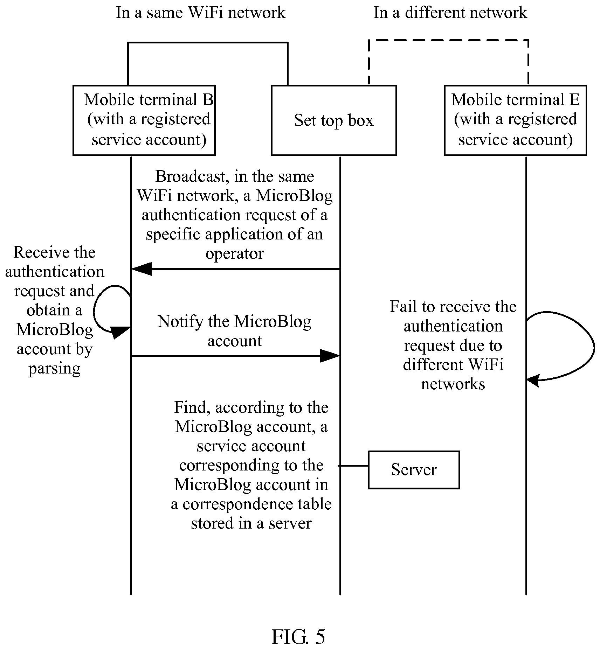

The mobile terminal is a mobile terminal that can identify a user identity, for example, a terminal for next-to-skin use by a user, such as a mobile phone, a tablet, or a wrist band. The wireless network may include a wireless local area network that is commonly used in people's daily life, for example, WiFi and Bluetooth. A prerequisite for implementing the method is that the set top box and the mobile terminal share a same wireless network. Referring to FIG. 5, a set top box cannot communicate with a mobile terminal E because the set top box and the terminal E are not in a same wireless network.

The terminal identifier mentioned herein refers to types of identifiers that can represent a user identity, for example, a MAC address of the mobile terminal, a mobile phone number, a fingerprint verification identifier in the mobile terminal, a user account that is associated with an application in the mobile terminal, or a serial number of the mobile terminal. Because there are lots of such terminal identifiers, the terminal identifiers are not listed one by one in this application document.

Step 102: The set top box searches, according to the terminal identifier, a relationship table for a service account and a password that are corresponding to the terminal identifier, where the foregoing relationship table includes a correspondence between a terminal identifier and each of a service account and a password.

In a specific implementation process, when a user subscribes to a service from an operator, registers a service account, and sets a password, the user may bind a terminal identifier of a mobile terminal of the user with the service account and the password. For example, the operator may record the terminal identifier of the mobile terminal of the user by using an authentication server or an application of the operator; or the user may record the terminal identifier by scanning, by using the mobile terminal of the user, a two-dimensional code provided by the operator, or by using an application provided by the operator, and establish a correspondence between the terminal identifier of the mobile terminal of the user and each of the service account and the password of the user. By associating an account of an application in the mobile terminal of the user, the user may further establish a correspondence between the account of the application in the mobile terminal of the user and each of the service account and the password of the user. Optionally, the user may establish correspondences between the service account of the user and multiple terminal identifiers.

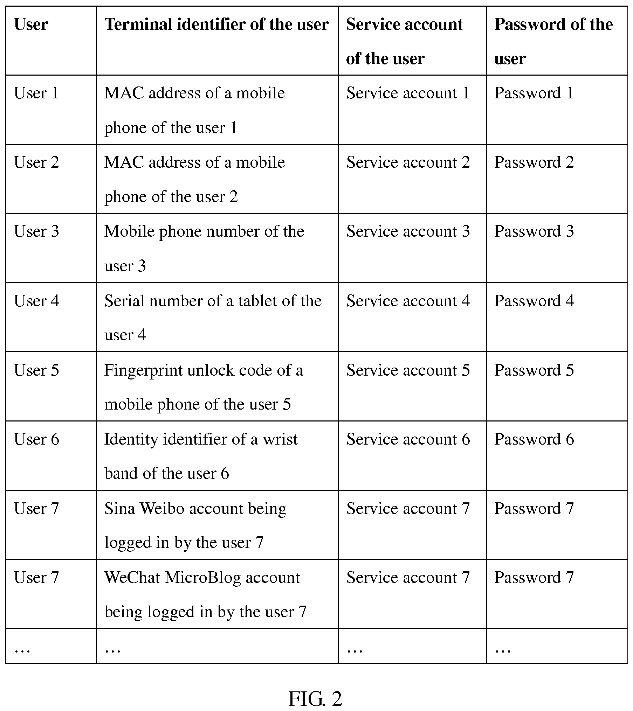

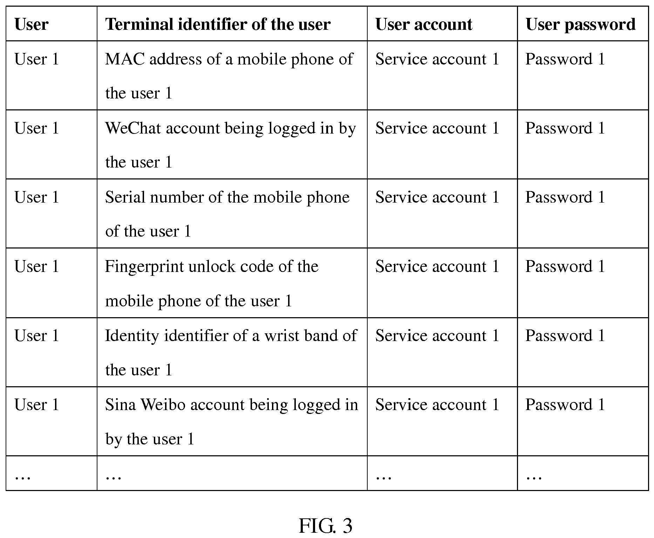

Correspondences, established by many users, between terminal identifiers and each of service accounts and passwords of the users can be merged into a correspondence table. Referring to FIG. 2, FIG. 2 is a correspondence table between a terminal identifier and each of a service account and a password. The established correspondence table may be stored in the authentication server of the operator. For a user, the user may establish only a correspondence table between a terminal identifier of a mobile terminal of the user and each of a service account and a password, and the relationship table may be stored in an authentication server of an operator, or may be stored in a set top box of the user. Referring to FIG. 3, FIG. 3 is another correspondence table between a terminal identifier and each of a service account and a password. It is additionally noted that, if the user changes the password during use or changes some data in the relationship table, the operator will update the relationship table in a timely manner.

Step 103: If the set top box finds the service account and the password that are corresponding to the terminal identifier, the set top box logs in to a content server by using the service account and the password that are corresponding to the terminal identifier. The service account can be logged in with no need to manually perform any operation by the user.

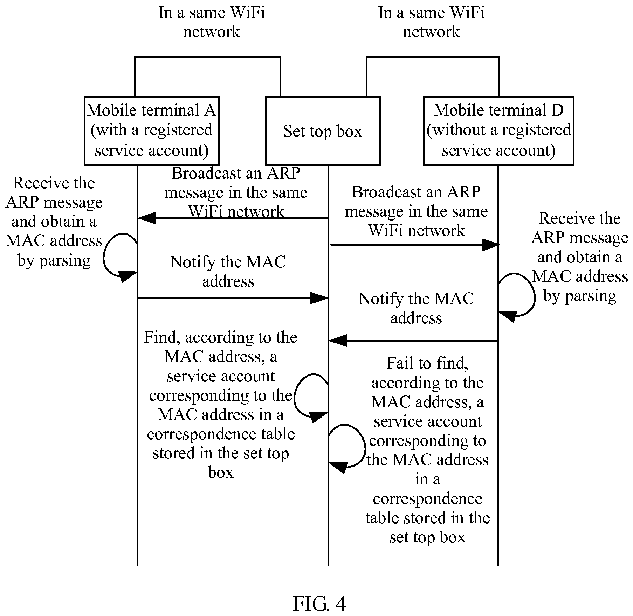

There are multiple specific implementation manners of step 101. The operator or a manufacturer of the set top box may install a specific application in or write a specific program into the set top box in advance, so that a network interface module of the set top box has specific capabilities of broadcasting a message and receiving a message returned by a terminal. Correspondingly, the mobile terminal may receive and respond to a broadcast message of the set top box by using a specific installed application of the operator or a built-in program. In a specific implementation manner, the following two cases may be included.
Case 1: Refer to FIG. 4 for a background example of a process of communication between a set top box and a mobile terminal A. If a set top box in a house of a user A and a mobile phone (the mobile terminal A) of the user A access a same WiFi network, the set top box sends, by using the WiFi network, an Address Resolution Protocol ARP (Address Resolution Protocol) request to all terminals connected to the WiFi network, where ARP is a TCP/IP protocol for obtaining a physical address according to an IP address. When sending information, the set top box broadcasts an ARP request including a destination IP address to all terminals on the network and receives response messages, so as to determine physical addresses of all the terminals. In this way, after receiving the ARP request from the set top box, the mobile terminal A sends, to the set top box, a MAC (Media Access Control or Medium Access Control) address of the mobile terminal A, that is, a physical address. Such a function may be implemented by using an application APP in the mobile phone, or may be implemented by a program that is built in upon delivery of the mobile phone. Once the set top box learns the MAC address of the mobile terminal A, the set top box may search, according to the MAC address, the foregoing previously established correspondence table for a service account and a password that are corresponding to the MAC address, where the relationship table may be stored in the authentication server, or may be stored in the set top box. This technical solution is based on an association between a service account of a user and an attribute identifier of a mobile terminal. A set top box can more easily obtain a terminal identifier of a mobile terminal of a user by using such a simple association, and further implement rapid service account search and login. A MAC address is used only as an example in this case. Many other identifiers of a mobile terminal may be equivalent or replaced, and all principles of technical implementation are also equivalent. Examples are not provided in this application document.
Case 2: Refer to FIG. 5 for a process of communication between a set top box and a mobile terminal B in accordance with the invention. A set top box in a house of a user B and a tablet computer (the mobile terminal B) of the user B access a same WiFi network, and a designated application of an operator is installed in the mobile terminal B. The designated application installed in the mobile terminal mentioned in this application document may be an application APP independently developed by the operator, or may be another application in cooperation with the operator, for example, an APP such as MicroBlog, WeChat, QQ, or Taobao that can be bound with a video service account of the user. A corresponding function program can be directly embedded into the application by an application developer. The set top box sends, by using the WiFi network, an authentication request of an application C to all terminals connected to the WiFi network, where the authentication request is a message requesting for login permission. The application designated by the operator can receive this message and can send, to the set top box, an application account that is used in the mobile terminal B and that is associated with the video service account. Such a function may be implemented by using the designated application APP in the mobile phone. For example, the user B installs the application designated by the operator in the tablet computer of the user B. When logging in to the application, the user B chooses to associate a MicroBlog account of the user B and authorizes the MicroBlog account. Therefore, the user B may log in to a server by using an account of the designated application of the user B, or may log in to a server by using the MicroBlog account of the user B. The set top box broadcasts, by using the WiFi network, a request for authenticating MicroBlog by the designated application, and the mobile terminal B in which the designated application of the operator is installed receives the authentication request, identifies the MicroBlog account associated by the user B, and sends the MicroBlog account of the user B to the set top box. The set top box searches, according to the MicroBlog account of the user B, the foregoing previously established correspondence table for a service account and a password that are corresponding to the MicroBlog account, where the relationship table may be stored in the server, or may be stored in the set top box. Whether the set top box searches the server, or a memory in the set top box, or both the server and the set top box for the correspondence table is preset by the operator. The operator may set a corresponding program in the set top box to search both or either of the server and the set top box for the relationship table. This technical solution is based on an association between a service account of a user and an account of another application commonly used by the user. A set top box can more easily obtain a terminal identifier of a mobile terminal of a user by using this simple association, and further implement rapid service account search and login. MicroBlog is used only as an example in this case. Accounts of all APPs commonly used by a user (for example, QQ, Baidu, Taobao, and WeChat) may be equivalent or replaced, and all principles of technical implementation are also equivalent. Examples are not provided one by one in this application document.

It should be noted that the set top box can obtain a terminal identifier of a terminal that is in a same wireless network environment. However, not all users of mobile terminals in the wireless network have subscribed to a television service from the operator. For example, the set top box obtains a terminal identifier of a user 1, a terminal identifier of a user 2, and a terminal identifier of a user 3. However, only the user 1 subscribes to the television service from the operator. In this case, the set top box can find a corresponding account and password according to only the terminal identifier of the user 1, and results of searching according to the terminal identifier of the user 2 and the terminal identifier of the user 3 are empty or invalid due to expiration, thereby causing a login failure. Therefore, the set top box can log in to the content server of the operator by using only the account and the password that are corresponding to the terminal identifier of the user 1. For details, reference may be made to a process of communication between a set top box and a mobile terminal D in FIG. 4. A user of the mobile terminal D has not registered a service account. Although the mobile terminal D can receive an ARP message broadcast by the set top box, the set top box cannot find a service account in the correspondence table even if the set top box can obtain a MAC address of the mobile terminal D, thereby causing a login failure. According to this technical solution, benefits and use experience of a user who has registered a service account can be ensured, and an opportunistic behavior of a user who has not registered a service account can be avoided. Optionally, if a corresponding application provided or designated by the operator is not installed in a mobile terminal of a user, the mobile terminal may not respond to broadcasting of a set top box.

In a specific implementation process, cases in which a set top box cannot implement automatic login further include: at least one of a service account or a password is invalid or abnormal; an account corresponding to the service account is in arrears; network interruption occurs; and the like.

It is additionally noted that the set top box broadcasts the ARP message at intervals of a specific time period by using the wireless network in which the set top box is located. Therefore, a same mobile terminal may receive the ARP message for multiple times, that is, the set top box may obtain a MAC address of the same mobile terminal for multiple times. If a service account corresponding to the MAC address of the mobile terminal is being logged in to the server of the operator on the set top box, when the set top box subsequently obtains the MAC address again, the service account corresponding to the MAC address does not need to be logged in again. According to this technical solution, a repeatedly found account can be prevented from being repeatedly logged in, thereby simplifying a procedure and avoiding an intermittent stop and skipping caused by multiple times of login.

In another personalized implementation manner of the foregoing method, according to the foregoing method, if the service account of the user 1 has been logged in on the set top box, and a service account of the user 2 and a service account of the user 3 are detected by using the foregoing method when the service account of the user 1 is being logged in, the set top box can allow simultaneously using the service account of the user 1, the service account of the user 2, and the service account of the user 3 to log in to the server of the operator, so that the operator can push, according to the three logged-in accounts, content which the three users are all interested in. If there is no content which all the three users are interested in, another push policy may be further used, for example, pushing several programs to each user, where those policies may be flexibly set by the operator. According to this technical solution, a watching requirement that multiple users simultaneously watch television can be satisfied. The multiple users can rapidly select, according to entire content pushed by the operator, a program that the multiple users are all interested in, and a common interest of the multiple users can be well explored, thereby promoting emotional communication.

In another personalized implementation manner of the foregoing method, for a service account being logged in, after a predetermined time, for example, within half an hour, if the set top box cannot obtain, by using the foregoing method, any terminal identifier corresponding to the service account, it indicates that a mobile terminal corresponding to the terminal identifier is not in the WiFi network, and further indicates that a user may no longer watch television. In this case, the set top box may log out the service account. According to this technical solution, the operator can push personalized program content in a more targeted manner, so as to avoid a waste of push pages.

In a specific implementation process, all the foregoing functions of the set top box may be implemented by a specific application program provided by the operator.

According to the technical solution of the present invention, different from a conventional login manner by using a set top box, a correspondence table between a terminal identifier of a mobile terminal of a user and each of a service account registered by a user and a password is pre-stored in a set top box or a server. When the set top box and a mobile terminal of a user are in a same wireless network environment, the set top box obtains a terminal identifier by broadcasting a message by using the wireless network, further searches the correspondence table for an account and a password according to the terminal identifier, and if the account and the password can be found, performs an automatic login operation. This technical solution is simple in implementation, thereby freeing a user from manually performing an operation. By means of rapid account login by using a set top box, the user can log in to an account of the user without input, and an operator can more rapidly push, according to the account of the user, content which the user is interested in, so that the user can obtain very good television service experience.

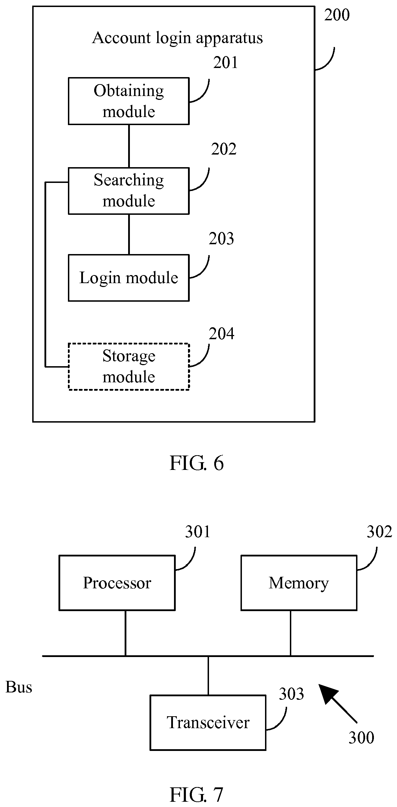

Referring to FIG. 6, FIG. 6 is an account login apparatus according to an embodiment of the present invention. The apparatus may be a set top box or a product similar to a set top box. The apparatus 200 includes:
an obtaining module 201, configured to: when the apparatus and a mobile terminal access a same wireless network, obtain a terminal identifier of the mobile terminal, where the obtaining module may be implemented by a common wireless transceiver module, and a corresponding transceiver mode may be controlled and implemented by a specific application provided by an operator;
a searching module 202, configured to search, according to the terminal identifier obtained by the obtaining module 201, a relationship table for a service account and a password that are corresponding to the terminal identifier, where the relationship table includes a correspondence between a terminal identifier and each of a service account and a password, and the searching module may include a software package having a set of functional program instructions, for example, may be implemented by a specific application provided by the operator; and may be stored in a memory and implemented by a specific chip or a processor; and
a login module 203, configured to: if the searching module 202 finds the service account and the password that are corresponding to the terminal identifier, log in to a content server by using the service account and the password that are corresponding to the terminal identifier, where the login module may also include a software package having a set of functional program instructions, for example, may be implemented by a specific application provided by the operator; and may be stored in a memory and implemented by a specific chip or a processor.

Related explanations and descriptions about the mobile terminal, the correspondence table, and the terminal identifier have been described in the method embodiment, and are not described again in the apparatus embodiment.

In a specific implementation process, the apparatus 200 further includes: a storage module 204, configured to pre-store a correspondence table between a terminal identifier and each of a service account and a password. The storage module may be implemented by a memory, especially, a static memory.

In a background example, the obtaining module is specifically configured to send an Address Resolution Protocol ARP request to the mobile terminal by using the wireless network, where the ARP request is used to instruct the mobile terminal to send a MAC address of the mobile terminal to the obtaining module. A correspondence table between a MAC address and a service account and a password is pre-stored in a server or the storage module 204. The searching module is specifically configured to search, according to the MAC address, of the terminal, learned by the obtaining module, the correspondence table for a service account and a password that are corresponding to the MAC address of the mobile terminal.

In accordance with the invention, the obtaining module is specifically configured to send an authentication request of a QQ application to the mobile terminal by using the wireless network, where the authentication request of the QQ application is used to instruct the mobile terminal to send, to the obtaining module, an account of the QQ application being used on the mobile terminal. A correspondence table between the account of the QQ application and each of a service account and a password is pre-stored in a server or the storage module 204. The searching module is specifically configured to search, according to the account, learned by the obtaining module, of the QQ application being used by the mobile terminal, the correspondence table for a service account and a password that are corresponding to the account of the QQ application being used on the mobile terminal.

In a specific implementation process, if the searching module 202 does not find the service account and the password that are corresponding to the terminal identifier, the login module 203 does not perform login. If the searching module 202 finds the service account and the password that are corresponding to the terminal identifier, and the service account corresponding to the terminal identifier is logged in by the login module and is being used, the login module no longer performs login again by using the service account corresponding to the terminal identifier.

As a personalized requirement, the login module 203 allows simultaneous login of multiple service accounts to the content server, so that the operator can push a corresponding program for each service account.

In another implementation manner, after performing login by using the service account corresponding to the terminal identifier, the login module 203 is further configured to: when the obtaining module 201 cannot obtain the terminal identifier again within a predetermined time, perform an offline operation on the service account corresponding to the terminal identifier, and log out the service account.

The technical solution of the present invention provides an account login apparatus, where the apparatus includes an obtaining module, a searching module, and a login module. The obtaining module can initiate, by using a wireless network, message broadcasting to a mobile terminal in the wireless network to obtain a terminal identifier. The searching module searches an existing correspondence table for a service account and a password by using the terminal identifier. The login module then performs a subsequent login operation according to a search result. A user does not need to be involved in the whole process, so that the user can log in to a service account of the user without an input operation, and further, an operator can more rapidly push content to the user in a more targeted manner, bringing good experience to the user. Especially, when multiple users frequently appear in a nearby environment of a set top box, an account can be switched without any input, thereby saving operation costs of the users.

Referring to FIG. 7, FIG. 7 is a schematic structural diagram of an account login device according to an embodiment of the present invention. The device 300 includes:
a processor 301, configured to: generate a corresponding operation control signal, send the operation control signal to a corresponding component of a computation processing device, and read and process data in software, especially read and process data and a program in a memory 302, so that function modules of the device 300 perform corresponding functions, so as to control the corresponding component to perform an action according to a requirement of an instruction;
the memory 302, configured to store a program and various types of data, and mainly store software units such as an operating system, an application, and a function instruction, or a subset of the software units, or an extended set of the software units, where the memory 302 may further include a non-volatile random access memory, provide the processor 301 with a resource for managing hardware, software, and data in the computation processing device, and support controlling the software and the application; and
a transceiver 303, configured to collect, obtain, or send information, and configured to transfer information between modules.

The foregoing hardware units may be connected by using a bus for communication.

In this way, the processor 301 controls, by invoking the program or an instruction stored in the memory 302, the transceiver 303 to broadcast a message in a wireless network that the processor 301 accesses, and receive a terminal identifier fed back by a mobile terminal in the wireless network. The processor 301 searches, according to the terminal identifier received by the transceiver 303, a relationship table for a service account and a password that are corresponding to the terminal identifier, where the relationship table may be stored in the memory 302, or may be stored in a server of an operator. If the processor 301 finds the service account and the password that are corresponding to the terminal identifier, a content server is logged in to by using the service account and the password that are corresponding to the terminal identifier.

In specific implementation, for an execution process of the apparatus 200 or the device 300, refer to the method embodiment shown in FIG. 4 and FIG. 5.

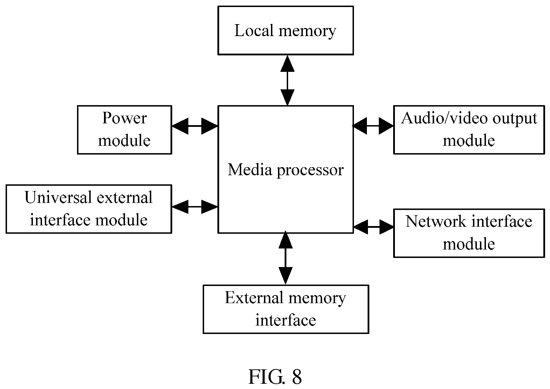

Referring to FIG. 8, FIG. 8 is a schematic structural diagram of a system of a set top box according to an embodiment of the present invention. The set top box can implement all methods that may be implemented in the foregoing embodiments. The set top box mainly includes: a media processor, a local memory, an external memory interface, a network interface module, a universal external interface module, an audio/video output module, and a power module. The media processor usually selects a dedicated set top box decoding chip as a main control CPU. The local memory can use, for example, a 32-bit DDR memory for system running and audio/video data storage. The external memory interface provides support for various peripheral storage devices including a Flash and a ROM. The network interface module is configured to implement functions of receiving and transmitting IP data and an audio/video stream. The audio/video output module is configured to complete a function of outputting an audio/video signal. The power module is responsible for supplying power to a chip and a whole system. The universal external interface module may be configured to implement a function of controlling signal transmission of all function modules by a CPU.

In a specific implementation process, the network interface module of the set top box may enable the set top box to access a network, including a wireless network, to work. The media processor invokes a program and an instruction stored in the local memory, broadcasts a message in the wireless network by using the network interface module, and obtains a terminal identifier. In this case, if a specific application APP (an APP by using which the user accesses a television service) of an operator or another application APP that is designated by the operator and that can be associated with a service account is installed on a mobile terminal in the wireless network, the mobile terminal, triggered by an APP function, receives a broadcast message from the set top box and sends a response message carrying the terminal identifier to the set top box. The network interface module of the set top box receives the response message; the media processor parses the response message, identifies the terminal identifier, searches, according to the terminal identifier, a correspondence table stored in the memory for a corresponding service account, and performs login by using the service account once finding the corresponding service account. After the login, an audio/video stream can be received by using the network interface module for program watching.

A person of ordinary skill in the art may understand that all or some of the steps of the foregoing methods may be implemented by a program instructing relevant hardware. The program may be stored in a computer readable storage medium. With descriptions of the foregoing embodiments, a person skilled in the art may clearly understand that the present invention may be implemented by hardware, firmware or a combination thereof.

The foregoing embodiments are merely embodiments of the technical solutions of the present invention, but are not intended to limit the protection scope of the present invention, which is defined by the following claims.

## Claims

1. An account login method, wherein the method comprises:
obtaining (101), by a set top box, a terminal identifier of a mobile terminal by using a wireless network, wherein both the set top box and the mobile terminal access the wireless network;
searching (102), by the set top box according to the terminal identifier, a relationship table for a service account and a password that are corresponding to the terminal identifier, wherein the relationship table comprises a correspondence between a terminal identifier and each of a service account and a password; and
if the set top box finds the service account and the password that are corresponding to the terminal identifier, logging (103) in to, by the set top box, a content server by using the service account and the password that are corresponding to the terminal identifier,
**characterized in that** the terminal identifier is an account of an application A being used by the mobile terminal, and the relationship table comprises a correspondence between the account of the application A and each of a service account and a password; the obtaining (101), by a set top box, a terminal identifier of a mobile terminal by using a wireless network comprises:
sending, by the set top box, an authentication request of the application A to the mobile terminal by using the wireless network, wherein the authentication request of the application A is used to instruct the mobile terminal to send, to the set top box, the account of the application A being used by the mobile terminal; and
the searching (102), by the set top box according to the terminal identifier, a relationship table for a service account and a password that are corresponding to the terminal identifier comprises:
searching, by the set top box according to the account of the application A being used by the mobile terminal, the relationship table for a service account and a password that are corresponding to the account of the application A being used by the mobile terminal.

2. The method according to claim 1, wherein the method further comprises:
if the set top box does not find the service account and the password that are corresponding to the terminal identifier, skipping performing, by the set top box, login.

3. The method according to claim 1, wherein the method further comprises:
if the set top box finds the service account and the password that are corresponding to the terminal identifier, and the service account corresponding to the terminal identifier is in a logged-in state in the set top box, skipping performing, by the set top box, login again by using the service account corresponding to the terminal identifier.

4. The method according to any one of claims 1 to 3, wherein the set top box allows simultaneous login of multiple service accounts to the content server, and allows the multiple service accounts to be online simultaneously.

5. The method according to any one of claims 1 to 4, wherein the method further comprises:
if the terminal identifier is not obtained again within a predetermined time after the set top box performs login by using the service account corresponding to the terminal identifier, performing an offline operation on the service account corresponding to the terminal identifier.

6. An account login apparatus (200), wherein the apparatus comprises:
an obtaining module (201), configured to: when the apparatus and a mobile terminal access a same wireless network, obtain a terminal identifier of the mobile terminal;
a searching module (202), configured to search, according to the terminal identifier obtained by the obtaining module, a relationship table for a service account and a password that are corresponding to the terminal identifier, wherein the relationship table comprises a correspondence between a terminal identifier and each of a service account and a password; and
a login module (203), configured to: if the searching module finds the service account and the password that are corresponding to the terminal identifier, log in to a content server by using the service account and the password that are corresponding to the terminal identifier,
**characterized in that** the terminal identifier is an account of an application A being used by the mobile terminal, and the relationship table comprises a correspondence between the account of the application A and each of a service account and a password; the obtaining module (201) is specifically configured to send an authentication request of the application A to the mobile terminal by using the wireless network, wherein the authentication request of the application A instructs the mobile terminal to send the account of the application A being used by the mobile terminal to the obtaining module; and the searching module (202) is specifically configured to search, according to the account, learned by the obtaining module, of the application A being used by the mobile terminal, the relationship table for a service account and a password that are corresponding to the account of the application A being used by the mobile terminal.

7. The apparatus according to claim 6, wherein the login module is configured to skip performing login if the searching module (202) does not find the service account and the password that are corresponding to the terminal identifier.

8. The apparatus according to claim 6, wherein the login module (203) is configured to not perform login again by using the service account corresponding to the terminal identifier if the searching module (202) finds the service account and the password that are corresponding to the terminal identifier, and the service account corresponding to the terminal identifier is in a logged-in state in the login module (203).

9. The apparatus according to any one of claims 6 to 8, wherein the login module (203) is configured to allow simultaneous login of multiple service accounts to the content server, and to allow the multiple service accounts to be online simultaneously.

10. The apparatus according to any one of claims 6 to 9, wherein the login module (203) is configured to perform an offline operation on the service account corresponding to the terminal identifier if the obtaining module (201) does not obtain the terminal identifier again within a predetermined time after the login module (203) performs login by using the service account corresponding to the terminal identifier.

## Patentansprüche

1. Konto-Anmeldeverfahren, wobei das Verfahren Folgendes umfasst:
Erhalten (101), durch eine Set-Top-Box, einer Endgerätekennung eines mobilen Endgerätes unter Verwendung eines Drahtlosnetzwerks, wobei sowohl die Set-Top-Box als auch das mobile Endgerät auf das Drahtlosnetzwerk zugreifen;
Suchen (102), durch die Set-Top-Box gemäß der Endgerätekennung, einer Beziehungstabelle für ein Dienstkonto und ein Passwort, die der Endgerätekennung entsprechen, wobei die Beziehungstabelle eine Korrespondenz zwischen einer Endgerätekennung und jeweils einem Dienstkonto und einem Passwort umfasst; und
falls die Set-Top-Box das Dienstkonto und das Passwort, die der Endgerätekennung entsprechen, findet, Anmelden (103), durch die Set-Top-Box, bei einem Content-Server unter Verwendung des Dienstkontos und des Passworts, die der Endgerätekennung entsprechen,
**dadurch gekennzeichnet, dass** die Endgerätekennung ein Konto einer Applikation A ist, die von dem mobilen Endgerät verwendet wird, und die Beziehungstabelle eine Korrespondenz zwischen dem Konto der Applikation A und jeweils einem Dienstkonto und einem Passwort umfasst; wobei das Erhalten (101), durch eine Set-Top-Box, einer Endgerätekennung eines mobilen Endgerätes unter Verwendung eines Drahtlosnetzwerks Folgendes umfasst:
Senden, durch die Set-Top-Box, einer Authentifizierungsanforderung der Applikation A zu dem mobilen Endgerät unter Verwendung des Drahtlosnetzwerks, wobei die Authentifizierungsanforderung der Applikation A verwendet wird, um das mobile Endgerät anzuweisen, das Konto der Applikation A, die von dem mobilen Endgerät verwendet wird, zu der Set-Top-Box zu senden; und
das Suchen (102), durch die Set-Top-Box gemäß der Endgerätekennung, einer Beziehungstabelle für ein Dienstkonto und ein Passwort, die der Endgerätekennung entsprechen, Folgendes umfasst:
Suchen, durch die Set-Top-Box gemäß dem Konto der von dem mobilen Endgerät verwendeten Applikation A, der Beziehungstabelle für ein Dienstkonto und ein Passwort, die dem Konto der von dem mobilen Endgerät verwendeten Applikation A entsprechen.

2. Verfahren gemäß Anspruch 1, wobei das Verfahren ferner Folgendes umfasst:
falls die Set-Top-Box das Dienstkonto und das Passwort, die der Endgerätekennung entsprechen, nicht findet, Überspringen der Durchführung der Anmeldung durch die Set-Top-Box.

3. Verfahren gemäß Anspruch 1, wobei das Verfahren ferner Folgendes umfasst:
falls die Set-Top-Box das Dienstkonto und das Passwort, die der Endgerätekennung entsprechen, findet, und das der Endgerätekennung entsprechende Dienstkonto sich in der Set-Top-Box in einem angemeldeten Zustand befindet, erneutes Überspringen der Durchführung der Anmeldung durch die Set-Top-Box unter Verwendung des der Endgerätekennung entsprechenden Dienstkontos.

4. Verfahren gemäß einem der Ansprüche 1 bis 3, wobei die Set-Top-Box gleichzeitige Anmeldung von mehreren Dienstkonten am Content-Server gestattet und zulässt, dass die mehreren Dienstkonten gleichzeitig online sind.

5. Verfahren gemäß einem der Ansprüche 1 bis 4, wobei das Verfahren ferner Folgendes umfasst:
falls die Endgerätekennung erneut nicht innerhalb einer vorbestimmten Zeit erhalten wird, nachdem die Set-Top-Box eine Anmeldung unter Verwendung des der Endgerätekennung entsprechenden Dienstkontos durchgeführt hat, Durchführen eines Offline-Vorgangs an dem der Endgerätekennung entsprechenden Dienstkonto.

6. Konto-Anmeldevorrichtung (200), wobei die Vorrichtung Folgendes umfasst:
ein Erhaltungsmodul (201), das für Folgendes ausgelegt ist: wenn die Vorrichtung und ein mobiles Endgerät auf dasselbe Drahtlosnetzwerk zugreifen, Erhalten einer Endgerätekennung des mobilen Endgerätes;
ein Suchmodul (202), das dazu ausgelegt ist, gemäß der durch das Erhaltungsmodul erhaltenen Endgerätekennung eine Beziehungstabelle für ein Dienstkonto und ein Passwort, die der Endgerätekennung entsprechen, zu suchen, wobei die Beziehungstabelle eine Korrespondenz zwischen einer Endgerätekennung und jeweils einem Dienstkonto und einem Passwort umfasst; und
ein Anmeldemodul (203), das für Folgendes ausgelegt ist: falls das Suchmodul das Dienstkonto und das Passwort, die der Endgerätekennung entsprechen, findet, Anmelden bei einem Content-Server unter Verwendung des Dienstkontos und des Passworts, die der Endgerätekennung entsprechen,
**dadurch gekennzeichnet, dass** die Endgerätekennung ein Konto einer Applikation A ist, die von dem mobilen Endgerät verwendet wird, und die Beziehungstabelle eine Korrespondenz zwischen dem Konto der Applikation A und jeweils einem Dienstkonto und einem Passwort umfasst; wobei das Erhaltungsmodul (201) speziell dazu ausgelegt ist, eine Authentifizierungsanforderung der Applikation A unter Verwendung des Drahtlosnetzwerks zu dem mobilen Endgerät zu senden, wobei die Authentifizierungsanforderung der Applikation A das mobile Endgerät anweist, das Konto der von dem mobilen Endgerät verwendeten Applikation A zu dem Erhaltungsmodul zu senden; und das Suchmodul (202) speziell dazu ausgelegt ist, gemäß dem durch das Erhaltungsmodul erlernten Konto der von dem mobilen Endgerät verwendeten Applikation A die Beziehungstabelle für ein Dienstkonto und ein Passwort zu suchen, die dem Konto der von dem mobilen Endgerät verwendeten Applikation A entsprechen.

7. Vorrichtung gemäß Anspruch 6, wobei das Anmeldemodul dazu ausgelegt ist, das Durchführen der Anmeldung zu überspringen, falls das Suchmodul (202) das Dienstkonto und das Passwort, die der Endgerätekennung entsprechen, nicht findet.

8. Vorrichtung gemäß Anspruch 6, wobei das Anmeldemodul (203) dazu ausgelegt ist, eine Anmeldung nicht erneut unter Verwendung des der Endgerätekennung entsprechenden Dienstkontos durchzuführen, falls das Suchmodul (202) das Dienstkonto und das Passwort, die der Endgerätekennung entsprechen, findet, und das der Endgerätekennung entsprechende Dienstkonto sich in dem Anmeldemodul (203) in einem angemeldeten Zustand befindet.

9. Vorrichtung gemäß einem der Ansprüche 6 bis 8, wobei das Anmeldemodul (203) dazu ausgelegt ist, gleichzeitige Anmeldung von mehreren Dienstkonten an dem Content-Server zu gestatten und zuzulassen, dass mehrere Dienstkonten gleichzeitig online sind.

10. Vorrichtung gemäß einem der Ansprüche 6 bis 9, wobei das Anmeldemodul (203) dazu ausgelegt ist, einen Offline-Vorgang an dem der Endgerätekennung entsprechenden Dienstkonto durchzuführen, falls das Erhaltungsmodul (201) die Endgerätekennung nicht erneut innerhalb einer vorbestimmten Zeit erhält, nachdem das Anmeldemodul (203) eine Anmeldung unter Verwendung des der Endgerätekennung entsprechenden Dienstkontos durchgeführt hat.

## Revendications

1. Procédé de connexion à un compte, dans lequel le procédé comprend les étapes consistant à :
obtenir (101), par un boîtier décodeur, un identifiant de terminal d'un terminal mobile en utilisant un réseau sans fil, dans lequel le boîtier décodeur et le terminal mobile accèdent tous deux au réseau sans fil ;
rechercher (102) par le boîtier décodeur, en fonction de l'identifiant du terminal, une table de relations pour un compte de service et un mot de passe correspondant à l'identifiant du terminal, dans lequel la table de relations comprend une correspondance entre un identifiant de terminal et chaque élément parmi un compte de service et un mot de passe ; et
si le boîtier décodeur trouve le compte de service et le mot de passe correspondant à l'identifiant du terminal, se connecter (103), par le boîtier décodeur, à un serveur de contenu en utilisant le compte de service et le mot de passe correspondant à l'identifiant du terminal,
**caractérisé en ce que** l'identifiant du terminal est un compte d'une application A utilisé par le terminal mobile, et la table de relations comprend une correspondance entre le compte de l'application A et chaque élément parmi un compte de service et un mot de passe ; l'obtention (101), par un boîtier décodeur, d'un identifiant de terminal d'un terminal mobile en utilisant un réseau sans fil, comprend l'étape consistant à :
envoyer, par le boîtier décodeur, une demande d'authentification de l'application A au terminal mobile en utilisant le réseau sans fil, dans lequel la demande d'authentification de l'application A est utilisée pour commander au terminal mobile d'envoyer au boîtier décodeur le compte de l'application A utilisé par le terminal mobile ; et
la recherche (102) par le boîtier décodeur, en fonction de l'identifiant du terminal, d'une table de relations pour un compte de service et un mot de passe correspondant à l'identifiant du terminal, comprend les étapes consistant à :
rechercher, par le boîtier décodeur en fonction du compte de l'application A utilisé par le terminal mobile, dans la table de relations, un compte de service et un mot de passe correspondant au compte de l'application A utilisé par le terminal mobile.

2. Procédé selon la revendication 1, dans lequel le procédé comprend en outre l'étape consistant à :
si le boîtier décodeur ne trouve pas le compte de service et le mot de passe correspondant à l'identifiant du terminal, ignorer l'opération de connexion par le boîtier décodeur.

3. Procédé selon la revendication 1, dans lequel le procédé comprend en outre l'étape consistant à :
si le boîtier décodeur trouve le compte de service et le mot de passe correspondant à l'identifiant du terminal et si le compte de service correspondant à l'identifiant du terminal est dans un état connecté dans le boîtier décodeur, ignorer l'opération de reconnexion, par le boîtier décodeur, en utilisant le compte de service correspondant à l'identifiant du terminal.

4. Procédé selon l'une quelconque des revendications 1 à 3, dans lequel le boîtier décodeur permet la connexion simultanée de plusieurs comptes de service au serveur de contenu et permet aux plusieurs comptes de services d'être en ligne simultanément.

5. Procédé selon l'une quelconque des revendications 1 à 4, dans lequel le procédé comprend en outre l'étape consistant à :
si l'identifiant du terminal n'est pas obtenu à nouveau dans un délai prédéterminé après que le décodeur a effectué la connexion en utilisant le compte de service correspondant à l'identifiant du terminal, effectuer une opération hors ligne sur le compte de service correspondant à l'identifiant du terminal.

6. Appareil de connexion à un compte (200), dans lequel l'appareil comprend :
un module d'obtention (201), configuré pour : lorsque l'appareil et un terminal mobile accèdent à un même réseau sans fil, obtenir un identifiant de terminal du terminal mobile ;
un module de recherche (202) configuré pour rechercher, en fonction de l'identifiant du terminal obtenu par le module d'obtention, une table de relations pour un compte de service et un mot de passe correspondant à l'identifiant du terminal, dans lequel la table de relations comprend une correspondance entre un identifiant de terminal et chaque élément parmi un compte de service et un mot de passe ; et
un module de connexion (203), configuré pour : si le module de recherche trouve le compte de service et le mot de passe correspondant à l'identifiant du terminal, se connecter à un serveur de contenu en utilisant le compte de service et le mot de passe correspondant à l'identifiant du terminal,
**caractérisé en ce que** l'identifiant du terminal est un compte d'une application A utilisé par le terminal mobile, et la table de relations comprend une correspondance entre le compte de l'application A et chaque élément parmi un compte de service et un mot de passe ; le module d'obtention (201) est spécifiquement configuré pour envoyer une demande d'authentification de l'application A au terminal mobile en utilisant le réseau sans fil, dans lequel la demande d'authentification de l'application A commande au terminal mobile d'envoyer le compte de l'application A utilisé par le terminal mobile au module d'obtention ; et le module de recherche (202) est spécifiquement configuré pour rechercher, en fonction du compte, appris par le module d'obtention de l'application A utilisé par le terminal mobile, dans la table de relations un compte de service et un mot de passe correspondant au compte de l'application A utilisé par le terminal mobile.

7. Appareil selon la revendication 6, dans lequel le module de connexion est configuré pour ignorer la connexion si le module de recherche (202) ne trouve pas le compte de service et le mot de passe correspondant à l'identifiant du terminal.

8. Appareil selon la revendication 6, dans lequel le module de connexion (203) est configuré pour ne pas effectuer de nouvelle connexion en utilisant le compte de service correspondant à l'identifiant du terminal si le module de recherche (202) trouve le compte de service et le mot de passe correspondant à l'identifiant du terminal, et si le compte de service correspondant à l'identifiant du terminal se trouve dans un état connecté dans le module de connexion (203).

9. Appareil selon l'une quelconque des revendications 6 à 8, dans lequel le module de connexion (203) est configuré pour permettre la connexion simultanée de plusieurs comptes de service au serveur de contenu et permettre aux plusieurs comptes de services d'être en ligne simultanément.

10. Appareil selon l'une quelconque des revendications 6 à 9, dans lequel le module de connexion (203) est configuré pour effectuer une opération hors ligne sur le compte de service correspondant à l'identifiant du terminal si le module d'obtention (201) n'obtient pas à nouveau l'identifiant du terminal dans un délai prédéterminé après que le module de connexion (203) a effectué la connexion en utilisant le compte de service correspondant à l'identifiant du terminal.
